(19) Europäisches Patentamt
European Patent Office
Office européen des brevets

(11) **EP 4 654 074 A1**

(12) **EUROPEAN PATENT APPLICATION**

(43) Date of publication:
26.11.2025 Bulletin 2025/48

(21) Application number: 25175296.0

(22) Date of filing: 09.05.2025

(51) International Patent Classification (IPC):
**G06F 40/284** (2020.01)    **G06F 16/353** (2025.01)
**G06F 40/295** (2020.01)    **G06F 40/30** (2020.01)
**G06F 40/40** (2020.01)

(52) Cooperative Patent Classification (CPC):
**G06F 40/30; G06F 16/353; G06F 40/284;**
**G06F 40/295; G06F 40/40;** G06F 16/345

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.05.2024 US 202418669447

(71) Applicant: Microsoft Technology Licensing, LLC
Redmond, WA 98052 (US)

(72) Inventors:
• YUN, Xi
Redmond, Washington, 98052 (US)
• LEI, Deren
Redmond, Washington, 98052 (US)
• LI, Yaxi
Redmond, Washington, 98052 (US)
• WANG, Mingyu
Redmond, Washington, 98052 (US)
• GOREVSKI, Alexander T
Redmond, Washington, 98052 (US)
• CHING, Yuet
Redmond, Washington, 98052 (US)
• SUN, Jiantao
Redmond, Washington, 98052 (US)
• CHEN, Zheng
Redmond, Washington, 98052 (US)
• CHAKRABARTI, Kaushik
Redmond, Washington, 98052 (US)

(74) Representative: CMS Cameron McKenna Nabarro
Olswang LLP
Cannon Place
78 Cannon Street
London EC4N 6AF (GB)

(54) **TRAINING AND APPLYING A KEY SENTENCE CLASSIFIER MODEL**

(57) A technique for interacting with a generative language model includes identifying one or more key sentences in an input document using a key sentence classifier model and/or an entity extraction model. Each key sentence summarizes a part of information conveyed by the input document. The technique further includes generating a compressed document that selectively includes the one or more key sentences. The technique then generates a prompt that includes the compressed document instead of the input document and submits the prompt to the language model. The technique reduces consumption of resources and increases performance by reducing the size of the prompt. A training system produces the key sentence classifier model by first training a pair-comparing model based on a relatively small amount of human-labeled data, and then leveraging the pair-comparing model to produce a synthetic data set on which the key sentence classifier model is trained.

FIG. 1

EP 4 654 074 A1

**Description**

**BACKGROUND**

Some generative language models operate by transforming an input prompt into a language model response. The prompt identifies a task to be performed, given some contextual information. For example, the prompt specifies a question to be answered on the basis of an input document. In other cases, the prompt specifies an action to be performed on the input document itself, such as the task of summarization. The size of a prompt is measured by the number of tokens it contains, including the number of tokens in any contextual information. "Tokens" refers to the number of words or other information-bearing units in the prompt.

**SUMMARY**

Increasing the size of a prompt submitted to a generative language model has negative consequences in some circumstances. For instance, increasing the size of the prompt sometimes degrades the performance of the language model. It also increases the consumption of memory and processor resources by the language model, which, in turn, drives up the cost of using the language model. Increasing the size of the prompt also increases the latency at which the language model delivers its response. One way to improve the performance of a language model is by training it on a robust set of relevant training examples. In many settings, however, it is expensive, resource-intensive, and time-consuming to obtain these training examples.

Functionality is forth herein for addressing at least some of the above technical challenges. According to one illustrative aspect, an item-compressing system identifies one or more key sentences in an input document using a key sentence (KS) classifier model and/or an entity extraction model. The KS classifier model includes parameters that have been trained to enable the KS classifier model to identify sentences in input documents that are also present in summaries associated with those input documents. The entity extraction model identifies entity mentions in the input document. An entity mention is an instance of an entity name in the input document, that is, an occasion in which a particular entity is mentioned in the input document. The technique then generates a compressed document that includes the one or more key sentences.

According to another illustrative aspect, an application system generates a prompt that includes the compressed document instead of the input document. The prompt is provided to a language model, and a language model response is received in response thereto. The use of a smaller prompt reduces the consumption of resources by the language model, and therefore also reduces the cost associated with the use of the language model. The use of a smaller prompt also improves performance and latency of the language model.

According to another illustrative aspect, a training system produces the KS classifier model by first obtaining a set of labeled item pairs. In a bootstrapping approach, the training system first trains a pair-comparing model to identify key sentences in unlabeled documents, and then uses the pair-comparing model to apply labels to a set of unlabeled documents. The training system then trains the KS classifier model based on a set of labeled documents that have been labeled by the pair-comparing model. The training system enables a robust KS classifier model to be trained even without a large number of preexisting documents that have been manually labeled.

There is provided a technique for interacting with a generative language model includes identifying one or more key sentences in an input document using a key sentence classifier model and/or an entity extraction model. Each key sentence summarizes a part of information conveyed by the input document. The technique further includes generating a compressed document that selectively includes the one or more key sentences. The technique then generates a prompt that includes the compressed document instead of the input document and submits the prompt to the language model. The technique reduces consumption of resources and increases performance by reducing the size of the prompt. A training system produces the key sentence classifier model by first training a pair-comparing model based on a relatively small amount of human-labeled data, and then leveraging the pair-comparing model to produce a synthetic data set on which the key sentence classifier model is trained. More generally, any of the above functions are capable of being manifested in various types of systems, devices, components, methods, computer-readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

**BRIEF DESCRIPTION OF DRAWINGS**

Fig. 1 shows a training system for training a key sentence (KS) classifier model.

Fig. 2 shows an item-compressing system for using the KS classifier model to compress an input document.

Fig. 3 shows an application system for applying the item-compressing system of Fig. 2 to reduce the size of a prompt submitted to a language model.

Figs. 4 and 5 show two ways of implementing a pair-comparing model, which the training system of Fig. 1 uses to automatically generate a set of labeled documents.

Fig. 6 shows one way of implementing the KS classifier model produced by the training system of Fig. 1.

Fig. 7 shows an entity exaction component, which provides an alternative way to identify key sentences in a document.

Fig. 8 shows one implementation of an item-segmenting component, which is used in one implementation of the item-compressing system of Fig. 2.

Fig. 9 shows an illustrative language model for implementing various functions of the computing system of Fig. 1.

Fig. 10 is a flowchart that provides an overview of one manner of operation of the item-compressing system of Fig. 2 and the application system of Fig. 3.

Fig. 11 is a flowchart that provides an overview of one manner of operation of the training system of Fig. 1.

Fig. 12 shows computing equipment that, in some implementations, is used to implement the computing system of Fig. 1.

Fig. 13 shows an illustrative type of computing system that, in some implementations, is used to implement any aspect of the features shown in the foregoing drawings.

The same numbers are used throughout the disclosure and figures to reference like components and features.

## DETAILED DESCRIPTION

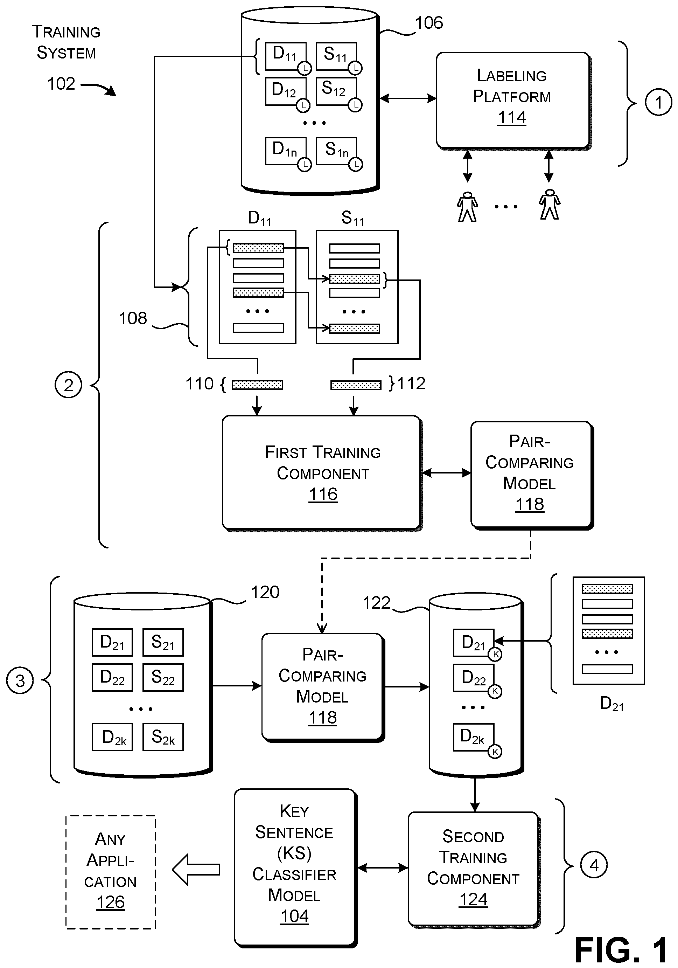

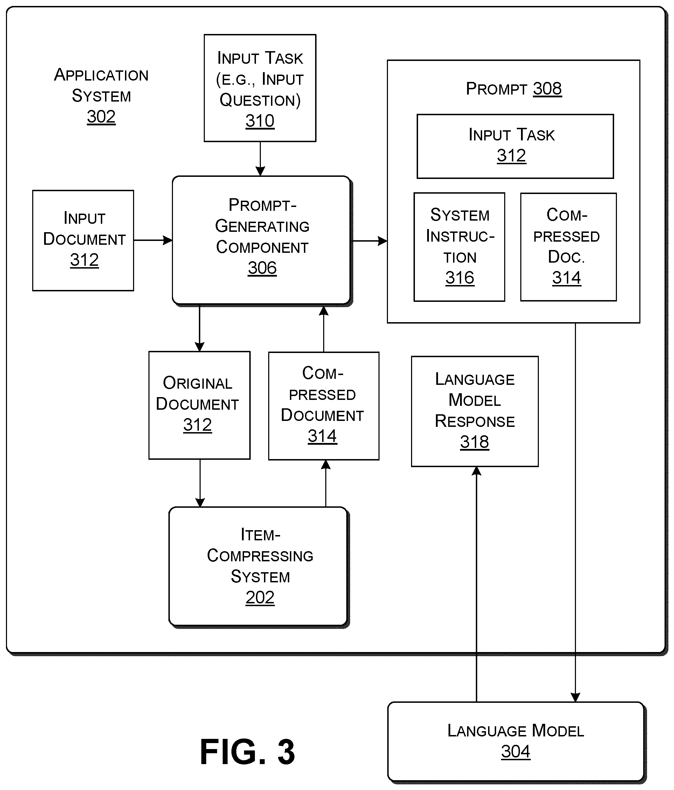

Fig. 1 shows a training system 102 for training a key sentence (KS) classifier model 104. The purpose of the KS classifier model 104 is to determine which sentences (if any) in an input document would also likely be found in a summary of the input document. This determination is independent of whether an actual summary of the input document actually exists. As will be described in connection with Fig. 3, one application system uses the KS classifier model 104 to reduce the size of prompts submitted to a generative language model.

In some examples, a document includes a body of text having any size. For example, a document refers to a text document created by a word processing application, a web page, an email message, a blog post, or an audio transcript. In other cases, a document is historical context information associated with a language model session. For example, the document provides a concatenated series of questions and responses exchanged between a user and the language model in the course of a multi-turn interaction. This type of context information can grow quite large as the interaction proceeds. In some cases, a document also includes non-text content, including image content, video content, audio content, etc., or any combination thereof. In addition, a single document can encompass two or more individual units of content of the same type or different respective types, such as two or more documents (such as documents in a folder or two or more emails).

A summary is a document that summarizes the information conveyed by another document. In some examples, an input item refers more generically to any content item, including a document, a summary, etc. A sentence refers to a group of two or more words. In some cases, the sentence is a grammatically complete sentence. In other case, the sentence is a phrase or other portion of a grammatically compete sentence. Further, any reference to processing performed with respect to a sentence does not preclude the possibility that the processing is performed with respect to a larger unit of text, of which the sentence is a part.

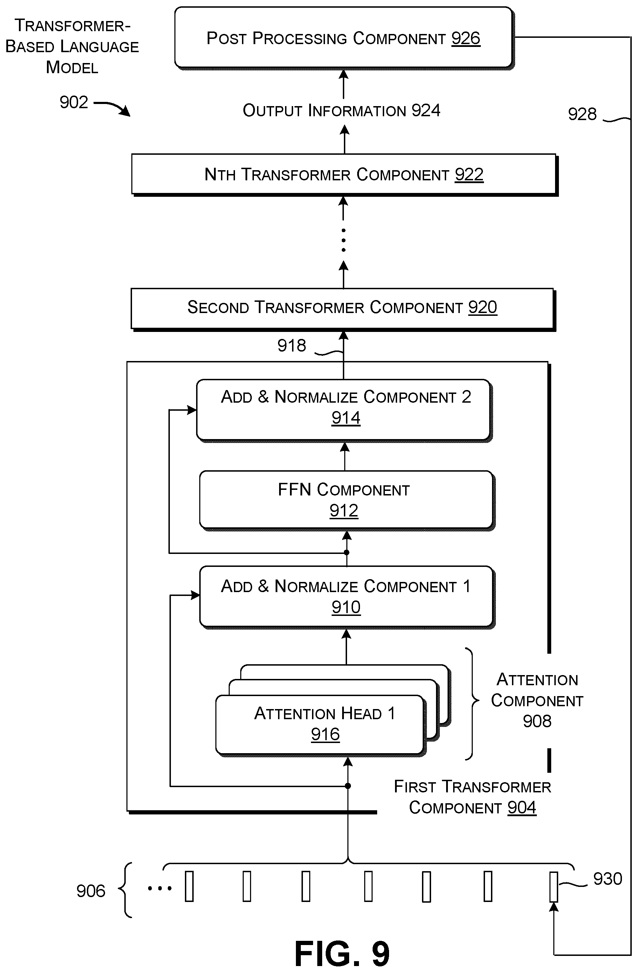

More generally, the following terminology is relevant to some examples presented herein. A "machine-trained model" or "model" refers to computer-implemented logic for executing a task using machine-trained parameters that are produced in a training operation. A language model that a is specific type of machine-trained model that, in some modes, processing tokens of linguistic information, an example of which is set forth below in the explanation of Fig. 9. A "parameter" refers to any type of parameter value that is iteratively produced by the training operation, including a weight value, bias value, etc. A "distributed vector" expresses the semantic content of an information item by distributing information over its $k$ dimensions. A distributed vector is in contrast to a sparse one-hot vector that allocates particular dimensions of the vector to particular concepts. A "token" refers to a unit of information processed by a machine-trained model, such as a word or a part of a word. In some cases, a tokenizer produces the tokens, but an item (e.g., a text passage) is said to be composed of tokens in a general sense (in which "token" is a synonym of "part"), irrespective of when and where those tokens are actually produced. A "prompt" refers to a sequence of tokens submitted to a machine-trained model.

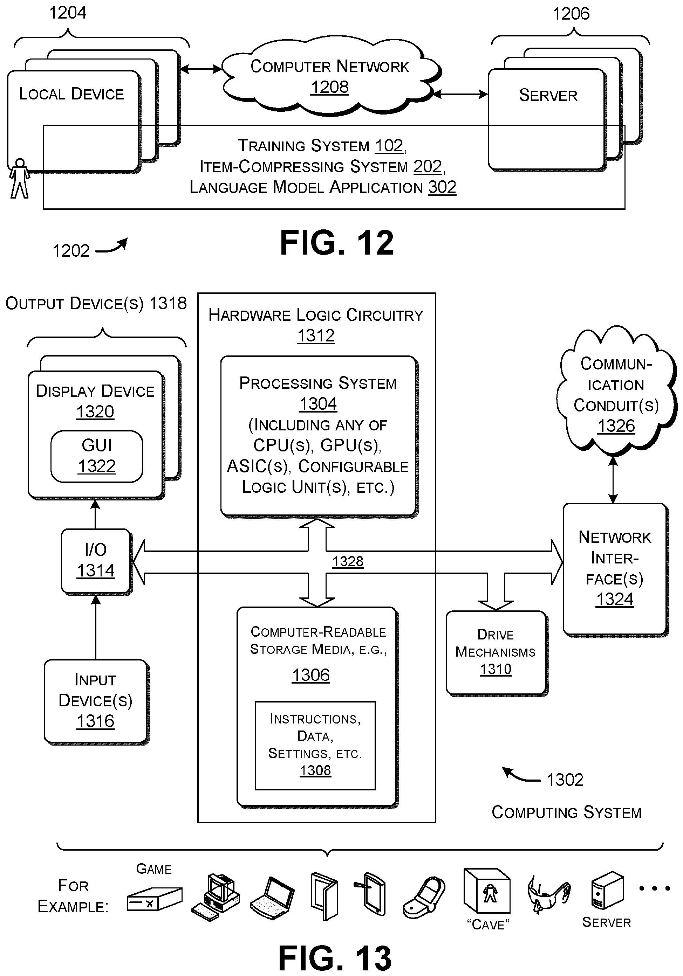

In some contexts, terms such as "component," "module," "engine," and "tool" refer to parts of computer-based technology that perform respective functions. Figs. 12 and 13, described below, provide examples of illustrative computing equipment for performing these functions. The term "prescribed" is used to designate that something is purposely chosen according to any application-specific considerations. Reference to prescribed thresholds in different contexts is not meant to suggest that the prescribed thresholds have the same value; indeed, the values are generally different for different contexts. "Obtaining" and its variants refers to any manner by which an item (e.g., information) is provided; this term encompasses received the item from any remote and/or local source, manually creating the item, automatically generating the item, etc.

The training system 102 of Fig. 1 applies a training process that includes plural phases, labeled in Fig. 1 as phases (1), (2), (3), and (4). In the first phase, an initial set of labeled item pairs are collected and stored in a data store 106. Each pair includes a document and an associated summary. Each document of a pair includes at least one sentence that has been labeled as a key sentence. Each summary, associated with a particular document of an item pair, includes at least one summary sentence that is associated with a key sentence in the particular document. For example, Fig. 1 shows an illustrative item pair 108 that includes a document $D_{11}$ and an associated summary $S_{11}$. An illustrative key sentence 110 in the document $D_{11}$ is associated with a summary sentence 112 in the summary $S_{11}$. That is, the key sentence 110 is associated with the summary sentence 112 because they are semantically related, and that the document sentence 110 is a likely origin of the information imparted by the summary sentence 112.

In some examples, a labeling platform 114 applies labels to the item pairs based on analysis performed by human labelers. Alternatively, or in addition, any supervised or semi-supervised process is used to provide at least some of the item pairs in the data store 106. Whatever the origin of these item pairs, in some examples, the data store 106 provides a relatively modest amount of item pairs, such as 5000 item pairs. These items pairs can be regarded as correct by definition, and may be referred to as initial, seed, ground-truth, or "gold" item pairs. More generally, any of the data on which training is performed is obtained from any source(s), including various local and/or remote repositories of documents, summaries, etc. Documents include articles, web pages, posts, messages, etc.

In the second phase, a first training component 116 trains a pair-comparing model 118 based on the item pairs in the data store 106. The training generally includes the following operations for a particular training example: (a) producing a score that expresses an extent to which a key sentence matches its associated summary sentence; (b) comparing the model-generated score to a ground-truth result; and (c) adjusting parameters of the pair-comparing model 118 based on the difference between the model-generated score and the ground-truth result. Over several iterations, the first training component 116 attempts to minimize the differences between model-generating scores and ground-truth results. In some implementations, the first training component 116 expresses loss using cross entropy, and updates the parameters of the pair-comparing model 118 using stochastic gradient descent in combination with back propagation.

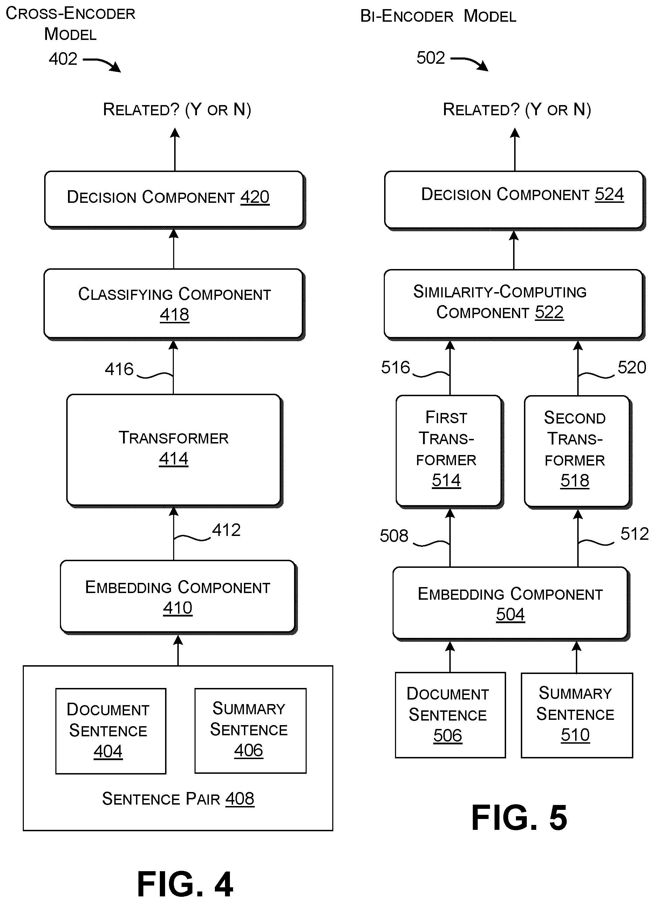

Examples of different kinds of pair-comparing models will be set forth below in the context of the explanation of Figs. 4 and 5. By way of preview of that explanation, Fig. 4 shows a cross-encoder model that maps a concatenation of a document sentence and a summary sentence into a score that reflects the extent to which the document sentence matches the summary sentence. Fig. 5 shows a bi-encoder model that uses a first pipeline to transform a document sentence into document-sentence hidden state information, a second pipeline to transform a summary sentence into summary-sentence hidden state information, and post-processing functionality for determining the distance between the document-sentence hidden state information and the summary-sentence hidden state information. In some implementations, both the cross-encoder model and the bi-encoder model rely on BERT-based transformer technology. Background information on the general topic of BERT-based transformer technology is provided in Devlin, et al., "BERT: Pre-training of Deep Bidirectional Transformers for Language Understanding," arXiv, arXiv:1810.04805v2 [cs.CL], May 24, 2019, 16 pages. An explanation of aspects of transformer-based technology is also provided below in the context of the description of Fig. 9.

More generally, a base BERT-type transformer model includes pretrained parameters. In some implementations, the training system 102 produces the machine-trained models shown in Fig. 1 by fine-tuning the pretrained parameters. In other implementations, the training system 102 trains the parameters of the machine-trained models shown in Fig. 1 from "scratch," that is, without the use of initial pretrained parameters.

In the third phase of training, the training system 102 uses the pair-comparing model 118 to automatically apply labels to another set of item pairs in a data store 120. For instance, each such item pair includes a document and an associated summary, such as a journal article and an abstract associated with the journal article. For each such item pair of a particular document and a particular summary, the pair-comparing model 118 compares each document sentence of the particular document with each summary sentence of the particular summary, to produce a matching score. The pair-comparing model 118 identifies a sentence as a key sentence if the pairing of the key sentence and at least one summary sentence yields a matching score above a prescribed threshold value. A data store 122 stores documents that have been identified as containing a key sentence, with labels that identify those key sentences. For instance, the pair-comparing model 118 determines that a document $D_{21}$ contains at least two key sentences. Note that, at this juncture, the training system 102 need not retain a record of the summary sentences that have been determined to match the key sentences.

In the fourth phase, a second training component 124 trains the KS classifier model 104 based on the labeled documents in the data store 122. For a particular training example associated with a particular document in the data store 122, the training generally includes: (a) producing a score that for each sentence in the particular document; (b) comparing the model-generated score with a ground-truth result that specifies whether the document sentence is a key sentence or not; and (c) adjusting parameters of the KS classifier model 104 based on the difference between the model-generated score and the ground-truth result. Over several iterations, the second training component 124 attempts to minimize the differences between model-generating scores and ground-truth results. In some implementations, the second training component 124 expresses loss using cross entropy, and updates the parameters of the KS classifier model 104 using stochastic gradient descent in combination with back propagation. Overall, the second training component 124 performs a form of weakly supervised training insofar as training proceeds on the basis of automatically labeled documents (not manually labeled documents).

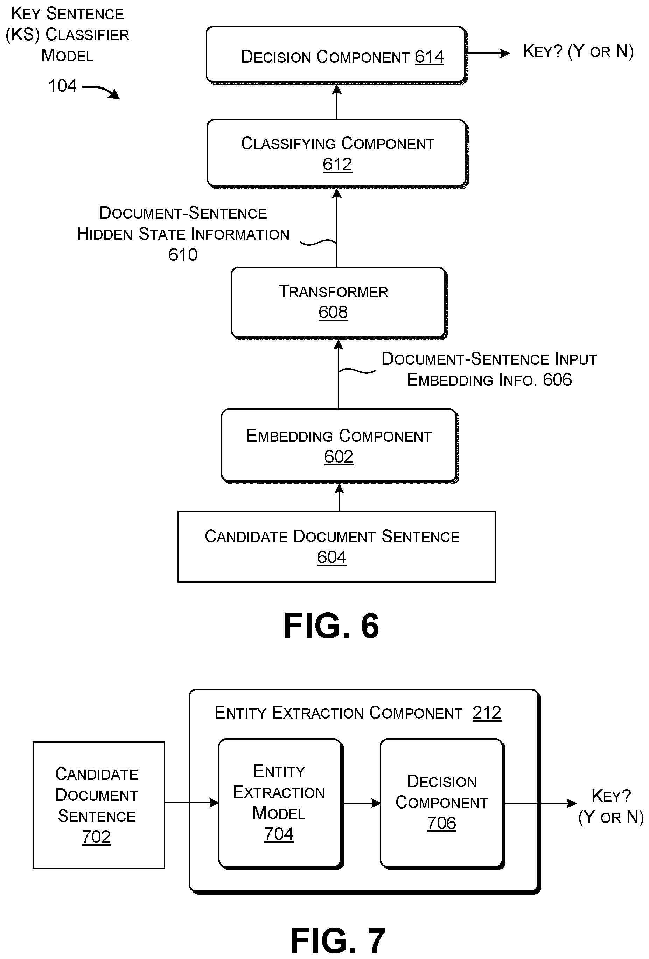

One example of a KS classifier model will be described below in the context of the explanation of Fig. 6. By way of preview of that explanation, the KS classifier model 104 uses BERT-based transformer technology to map a candidate sentence into a score that indicates whether or not the candidate sentence is a key sentence.

In the inference (production) stage, any application system 126 can make use of the KS classifier model 104. As will be described in connection with the explanation of Fig. 3, one application system uses the KS classifier model 104 to reduce the size of a prompt submitted to a generative language model. Other application systems rely on the KS classifier model 104 to produce a summary of a document, to conduct a search based on the document, and so on.

By way of summary, the pair-comparing model 118 provides a bootstrapping role that enables the collection of a relatively large amount of training examples on which the KS classifier model 104 is trained, starting with a relatively modest amount of manually labeled training examples (produced in phase 1). This outcome, in turn, reduces memory and processor resources consumed by the training system 102, and also reduces the time and cost associated with training. It also improves the scalability of the training system 102, insofar as the training system 102 can be effectively applied to various environments in which there is a scarcity of preexisting labeled training examples.

Further note that the training system 102 produces more reliable results than other types of summarization techniques, such as abstractive summarization techniques. This is because the training system 102 makes decisions based on the pairwise analysis of the sentences, which is a process that is efficient and predictable compared to a more global and diffused analysis of the input document as a whole.

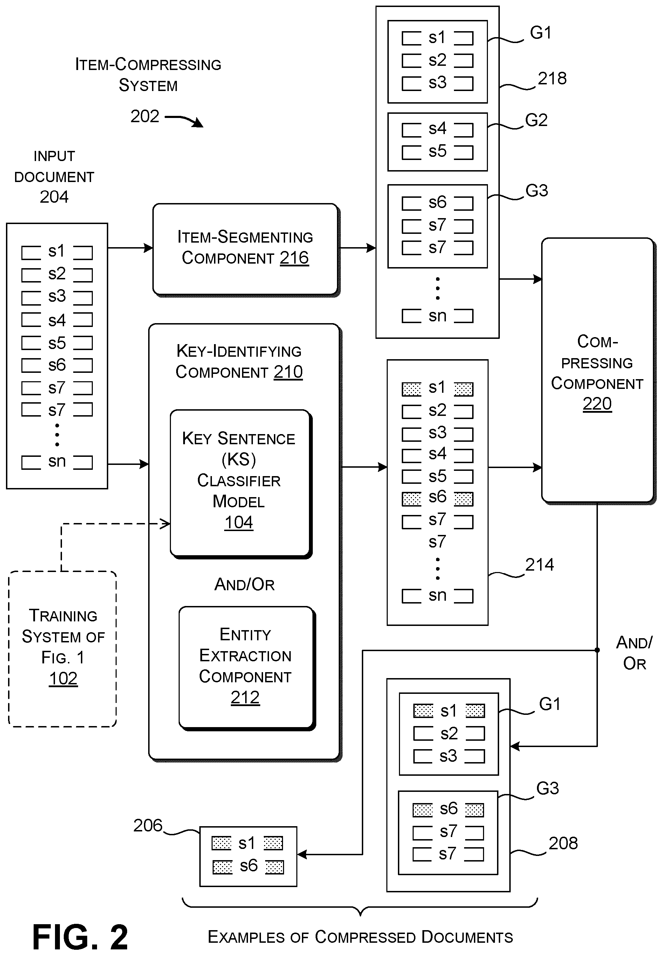

Fig. 2 shows an item-compressing system 202 for using the KS classifier model 104 produced by the training system 102 of Fig. 2 to compress an input document 204. Assume that the input document 204 includes a series of sentences ($s_1$-$s_n$) that are unlabeled as to which (if any) of sentences are key sentences. A key sentence is a sentence that expresses part of a summary of the input document 204, which may or may not exist. The objective of the item-compressing system 202 is to produce a compressed document including content that includes the key sentences that have been identified. Fig. 2 shows two examples of compressed documents: a compressed document 206 that includes just the key sentences in the input document 204, and a compressed document 208 that includes segments (G1, G3) of the input document 204, each of which includes at least one key sentence.

A key-identifying component 210 identifies which of the sentences in the input document 204 are key sentences, if any. The key-identifying component 210 performs this task using the KS classifier model 104 produced by the training system 102 of Fig. 1 and/or an entity extraction component 212. The operation of the KS classifier model 104 has been described above. It maps each candidate sentence in the input document 204 to a score that indicates whether or not the sentence is a key sentence.

The entity extraction component 212 uses an entity extraction model (also referred to as a named entity recognition model) to detect entity mentions in each candidate sentence. That is, an entity is an object within a particular predefined set of objects, often associated with particular locations, people, events, products, and so on. An entity mention is a word or phrase that is an instance of a particular entity. The entity extraction component 212 identifies a sentence as a key sentence if the number of entity mentions in the sentence is above a prescribed threshold value. That is, the entity extraction component 212 identifies a number of times that a sentence refers to any entity within a specified group of entity types, without regard to the particular names associated with those entities.

Fig. 2 shows an example of a labeled document 214 in which at least two sentences have been labeled as key sentences, e.g., sentence $s_1$ and sentence $s_6$. The key-identifying component 210 can also store information that identifies whether a key sentence has been identified using the KS classifier model 104 or the entity extraction component 212, or both.

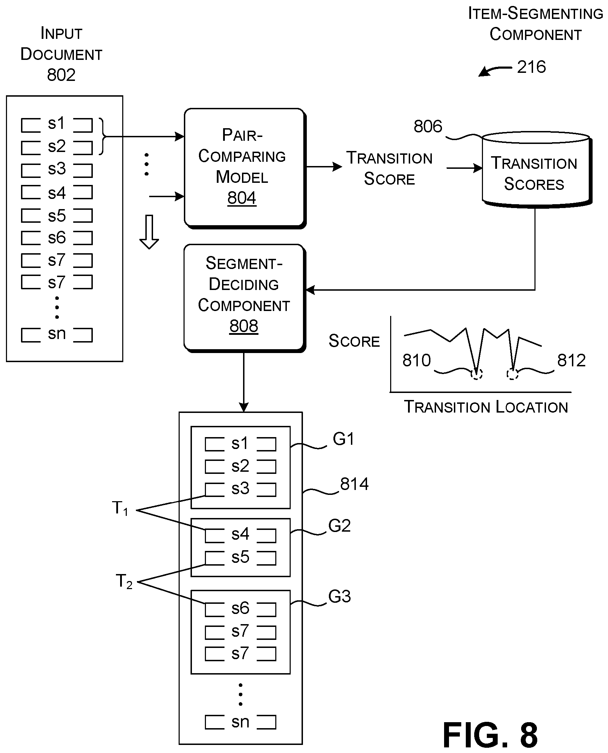

In an independent path, an item-segmenting component 216 identifies segments in the input document 204. A segment is a part of the input document 204 that shares a prescribed characteristic (or characteristics). For example, some implementations of the item-segmenting component 216 use a machine-trained model to identify the flow of topics within the input document 204, with each segment being associated with a particular topic. The item-segmenting component 216 then partitions the input document 204 into portions that pertain to respective topics. One example of this approach is set forth below in connection with the explanation of Fig. 8. Alternatively, or in addition, the item-segmenting component 216 partitions the input document 204 into segments based on paragraphs, pages, dialogue turns, etc. in the input document 204. Fig. 2 shows an example of a segmented document 218 that includes at least three segments (G1, G2, and G3). Each segment includes one or more sentences.

A compressing component 220 compresses the input document 204 into a compressed document based on the labeled document 214 and, in some cases, the segmented document 218. For instance, in a first implementation, the compressing component 220 retains any segment (identified in the segmented document 218) that includes a key sentence detected by the KS classifier model 104, and discards the remaining segments. In a variation of this implementation, the compressing component 220 retains any segment that matches a prescribed rule. One rule specifies that a qualifying segment has a prescribed number c of key sentences, where c is a configuration parameter. In the example of Fig. 2, this yields a compressed document 208 that includes at least segments G1 and G3.

In a second implementation, the compressing component 220 retains any key sentence (identified in the segmented document 218) that includes a key sentence detected by the entity extraction component 212, and excludes all other sentences. This yields a compressed document 206.

In a third implementation, the compressing component 220 combines the results of the KS classifier model 104 and the entity extraction component 212 to determine whether to retain an individual sentence under consideration or a segment in which this sentence occurs. For instance, the compressing component 220 only retains a sentence or segment containing this sentence if both the KS classifier model 104 and the entity extraction component 212 concur that the sentence is a key sentence. In a variation of this implementation, the compressing component 220 computes a weighted score based on a first score provided the KS classifier model 104 and a second score provided by the entity extraction component 212, and retains the sentence only if the weighted score is above a prescribed threshold value. In other variants, the compressing component 220 uses a machine-trained classifier model (not shown) to determine whether a sentence under consideration is a key sentence based on the scores provided by KS classifier model and the entity extraction model and/or any other contextual factors (such as the semantic and/or lexical content of the sentence itself).

Fig. 3 shows an application system 302 for applying the item-compressing system 202 of Fig. 2 to reduce the size of a prompt submitted to a generative language model 304. More specifically, Fig. 3 shows an example in which a prompt-generating component 306 produces a prompt 308 that expresses an input task 310 and an input document 312. For instance, the input task 310 asks a question to be answered, at least in part, based on context information provided by the input document 312. The input document 312 is obtained in any manner, including receiving the input document 312 from a local store and/or a remote store, manually creating the input document 312, etc.

One example of this type of question, for instance, asks "What is the current planetary status of Pluto based on the information provided in this article <document123>," where <documetn123> provides a link to a specific document, such as a Wikipedia article. In another example, the input task 310 is a request to summarize the contents of the input document 312. In another example, the input task 310 asks a question to be answered, at least in part, by a dialogue transcript provided by the input document 312.

In another example, the question does not explicitly refer to the input document 312, but the language model 304 will automatically consult the input document 312 in answering the question. For instance, assume that the input document 312 is a concatenation of all the questions and responses associated with a current interaction with the language model 304. The language model 304 will automatically consult this context history in answering a current question.

In any event, assume that the input task 310 is conveyed in a first number of tokens and the input document 312 includes a second number of tokens. Assume that the combined number of tokens in the input task 310 and the input document 312 is relatively large, e.g., including several thousand tokens. In some cases, the total number of tokens may exceed the maximum number of input tokens permitted by the language model 304.

As one function, the prompt-generating component 306 consults the item-compressing system 202 (of Fig. 2) to reduce the size of the input document 312. This yields a compressed document 314, such as any of the types of compressed documents described above in connection with Fig. 2. Next, the prompt-generating component 306 constructs the prompt 308 based on an expression of the input task 310 and the compressed document 314. The prompt 308 also optionally includes a system instruction 316 that informs the language model 304 how it is expected to interpret the input task 310 and the compressed document 314. For example, the system instruction 316 may specify, "You are a helpful assistant that provides a response to the user's question based on any supplemental text identified by the user's question."

In some examples, the language model 304 is any one of the family of GPT language models provided by OpenAI of San Fransisco, California, such as the GPT-4 model. Another example of a large pre-trained language model is described in Scao, et al., "BLOOM: A 176B-Parameter Open-Access Multilingual Language Model," arXiv, arXiv:2211.05100v2 [cs.CL], December 11, 2022, 62 pages. In other examples, the language model 304 is a smaller model that is capable of being executed on a local system (such a local computing device). An example of a smaller pretrained language model is described in Touvron, et al., "LLaMA: Open and Efficient Foundation Language Models," arXiv, arXiv:2302.13971v1 [cs.CL], February 27, 2023, 27 pages.

In operation, the language model 304 autoregressively maps the prompt 308 to a language model response 318, e.g., token by token. An example of autoregressive token generation is set forth below with respect to the explanation of Fig. 9.

The amount of memory and processor resources consumed by a language model generally grows with the size of an input prompt. As such, a provider of a language model sometimes charges a fee for use of the language model that is based on the number of tokens submitted to the language model in one or more prompts. Further, the amount of time that is required by a language model to process a prompt generally grows with the size of the prompt.

Further, a language model sometimes produces a response of poor quality when given a lengthy prompt. This is because the main objectives of a task are sometimes diluted or obscured by a long prompt. Due to these factors, a response produced by a language model may fail to answer a user's question and/or may contain hallucinations. A hallucination is a response that is not empirically supported by the information from which the language model has drawn, and/or a response that is otherwise nonsensical.

The application system 302 of Fig. 3 reduces the consumption of resources, latency, and cost associated with an interaction with the language model 304 by compressing the sizes of the input documents expressed by prompts. Smaller prompts also reduce the occurrence of hallucinations produced by the language model 304.

Fig. 4 shows a cross-encoder model 402, which is one implementation the pair-comparing model 118. The cross-encoder model 402 combines (e.g., concatenates) a document sentence 404 with an associated summary sentence 406, to produce a sentence pair 408.

An embedding component 410 transforms the sentence pair 408 into a sequence of input embedding vectors, collectively referred to herein as sentence-pair input embedding information 412. In some implementations, the embedding component 410 performs this task by tokenizing the sentence pair 408 into a series of tokens. A token refers to a unit of text having any granularity, such as an individual word, a word fragment produced by byte pair encoding (BPE), a character n-gram, a word fragment identified by the WordPiece or SentencePiece algorithm, etc. In some BERT-based implementations, the embedding component 410 also adds a start-of-sequence token to the start the sequence of tokens, e.g., a CLS token that maps to the predetermined code of 101. The embedding component 410 also optionally adds a SEP token to demarcate the document sentence 404 from the summary sentence 406, where the SEP token maps to another predetermined code. Next, the embedding component 410 uses one or more machine-trained layers (e.g., a linear feed-forward network) to map the sequence of tokens into the sentence-pair input embedding information 412. The embedding vectors in the sentence-pair input embedding information 412 include added position information that identifies the position of each token in the sequence of tokens.

A transformer 414 uses a pipeline of one or more transformer blocks (not shown) to map the sentence-pair input embedding information 412 into sentence-pair hidden state information 416. The sentence-pair hidden state information 416 includes a sequence of hidden state vectors associated with the tokens of the sentence pair 408. The explanation of Fig. 9 will provide an example of illustrative functionality associated with a transformer.

A classifying component 418 maps the sentence-pair hidden state information 416 into a classification result (e.g., a score). In some implementations, the classifying component 418 includes one or more machine-trained layers of any type, such as a fully-connected feed-forward network. In some implementations, the classifying component 418 operates on a pooled representation of the vectors of sentence-pair hidden state information 416. For instance, the pooled representation is the average, sum, or maximum of the vectors of the sentence-pair hidden state information 416. In other implementations, the classifying component 418 operates on the vector in the sentence-pair hidden state information 416 that is the counterpart of the CLS token in the sequence of input tokens.

A decision component 420 determines whether the document sentence 404 matches the summary sentence 406, e.g., by comparing a score produced by the classifying component 418 with a prescribed threshold value.

Fig. 5 shows another implementation of the pair-comparing model 118 used by the training system 102. An embedding component 504 maps a document sentence 506 into document-sentence input embedding information 508. The embedding component 504 separately maps an associated summary sentence 510 into summary-sentence input embedding information 512. A first transformer 514 maps the document-sentence input embedding information 508 into document-sentence hidden state information 516. A second transformer 518 separately maps the summary-sentence input embedding information 512 into summary-sentence hidden state information 520, in which is in the same vector space as the document-sentence hidden state information 516. In some implementations, each instance of hidden state information represents some type of aggregation of per-token hidden state vectors, e.g., produced by summing, averaging, or taking the maximum of the hidden state vectors. The embedding component 504 and the transformers (514, 518) are implemented using the same kind of functionality as the embedding component 410 and the transformer 414, respectively, of the cross-encoder model 402.

A similarity-computing component 522 determines the distance between the document-sentence hidden state information 516 and the summary-sentence hidden state information 520, e.g., using cosine similarity or any other distance measure. A decision component 524 determines whether the document sentence 506 matches the summary sentence 510 based on the result provided by the similarity-computing component 522, e.g., by comparing the result with a prescribed threshold value.

In other implementations, the pair-comparing model 118 uses a combination of the cross-encoder model 402 and the bi-encoder model 502. For example, the pair-comparing model 118 uses the bi-encoder model 502 to make a preliminary determination of whether a document summary matches an associated summary sentence. If so, the pair-comparing model 118 confirms the match using the cross-encoder model 402, which produces a more accurate determination than the bio-encoder model 502.

Fig. 6 shows one implementation of the KS classifier model 104 produced by the training system 102 of Fig. 1. An embedding component 602 maps a candidate document sentence 604 into document-sentence input embedding information 606. A transformer 608 maps the document-sentence input embedding information 606 into document-sentence hidden-state information 610. A classifying component 612 generates a score based on the document-sentence hidden-state information, and a decision component 614 determines whether or not the candidate document sentence 604 is a key sentence based on the score, e.g., by comparing the score to a prescribed threshold value. The above-described components are implemented in the same manner as the related components described above with respect to Fig. 4.

Fig. 7 shows one implementation of the entity extraction component 212 of Fig. 2. Recall that the entity extraction component 212 provides an alternative way of determining whether or not a candidate document sentence 702 is a key sentence based on the number of entity mentions in the candidate document sentence 702. In some implementations, the entity extraction component 212 is configured to identifying entities belonging to a specified group of entity types. For example, as a preliminary task, an administrator selects the group of entity types as a configuration setting. Alternatively, assume that the candidate document sentence 702 is part of a document having a prescribed subject matter field. The entity extraction component 212 automatically determines a group of entity types that is applicable to the subject matter field, e.g., using a subject matter classifier model (not shown) or rules-based system (not shown). For instance, a first group of entity types may be appropriate for medical-related documents (such as the "diagnosis" entity type), while a second group of entity types may be appropriate for a business-related field (such as the employee title entity type). Generally, the entity extraction component 212 can consider several factors in selecting a group, including any of the semantic content of the document 702, keywords in the document 702, metadata associated with the document 702, the file type of the document 702, the source of the document 702, etc.

In operation, an entity extraction model 704 first determines whether each token in the candidate sentence is an entity, and, if so, the type of entity associated with the token. A decision component 706 determines whether the candidate document sentence 702 as a whole is a key sentence by comparing the number of entity mentions in the candidate document sentence 702 and comparing this number to a threshold value.

The entity extraction model 704 uses any type of functionality to perform its task, including any of a conditional random fields (CRF) model, a recurrent neural network (RNN), a transformer-based model, etc. For example, the entity extraction model 704 uses the type of model shown in Fig. 6 to assign an entity type (if any) to each token of the candidate document sentence 702. That is, in the entity extraction context, the classifying component 610 maps each hidden state vector associated with each token into an entity type. Illustrative entity types in a particular group of entity types include person, location, event, etc.

Fig. 8 shows one implementation of the item-segmenting component 216 of Fig. 2. Recall that the purpose of the item-segmenting component 216 is to partition an input document 802 into plural segments. In some examples, the plural segments express information relating to different respective topics.

In some implementations, a pair-comparing model 804 determines whether each neighboring pair of sentences in the document 802 is semantically related. In the example of Fig. 8, for instance, the pair-comparing model 804 is determining whether the first two sentences ($s_1$, $s_2$) pertain to the same or different topics. The pair-comparing model 118 produces a transition score based on its processing. A data store 806 collects the transition scores for each pair of neighboring sentences in the document 802, including the pairs ($s_2$, $s_3$), ($s_3$, $s_4$), ($s_4$, $s_5$), and so on. In some implementations, the pair-comparing model 804 is implemented using the kind of functionality used by the cross-encoder model 402 of Fig. 4 or the bi-encoder model 502 of Fig. 5, except that the pair of input sentences in the case of Fig. 8 is two neighboring sentences in the same input document 802. Other implementations perform the same kind of analysis described above with respect to a series of other portions of the input document 802, such as paragraphs.

A segment-deciding component 808 determines transitions from one segment to another by comparing the sequence of transition scores in the data store 806. In particular, the segment-deciding component 808 determines that a transition has occurred whenever a transition score falls below a prescribed threshold value. This is a juncture in which there is a significant change in sentence topics. Fig. 8 shows an example in which there are two transition scores (810, 812) that satisfy this test. Assume that the first transition score 810 is associated with a transition between sentence $s_3$ and sentence $s_4$, and the second transition score 812 is associated with a transition between sentence $s_5$ and sentence $s_6$. Based on this result, the segment-deciding component 808 produces a segmented document 814 that partitions the input document 802 into at least three segments (G1, G2, and G3).

Fig. 9 shows a transformer-based language model ("language model") 902 for implementing any of the models described herein, including the pair-comparing model 118, the KS classifier model 104, or the generative language model 304 of Fig. 3. In the case of the pair-comparing model 118 or the KS classifier model 104, the language model 902 transforms input information to an output result in a single pass. A BERT-type transformer model is one example of this type of model. In the case of the language model 304, the language model 902 autoregressively maps prompt information to a response, e.g., token by token. A GPT model is one example of this type of model.

The language model 902 is composed, in part, of a pipeline of transformer components, including a first transformer component 904. Fig. 9 provides details regarding one way to implement the first transformer component 904. Although not specifically illustrated, other transformer components of the language model 902 have the same architecture and perform the same functions as the first transformer component 904 (but are governed by separate sets of weights).

The language model 902 commences its operation with the receipt of input information, such as a pair of sentences (in the case of the pair-comparing model 118), a single candidate sentence (in the case of the KS classifier model 104), or a prompt (in the case of the language model 304). An embedding component (not shown) maps the input information into a series of position-supplemented embedding vectors 906 in the manner described above. The position information added to each token embedding describes the embedding vector's position in the sequence of token embeddings.

The first transformer component 904 operates on the position-supplemented embedding vectors 906. In some implementations, the first transformer component 904 includes, in order, an attention component 908, a first add-and-normalize component 910, a feed-forward neural network (FFN) component 912, and a second add-and-normalize component 914.

The attention component 908 determines how much emphasis should be placed on parts of input information when interpreting other parts of the input information. Consider, for example, a sentence that reads: "I asked the professor a question, but he could not answer it." When interpreting the word "it," the attention component 908 will determine how much weight or emphasis should be placed on each of the words of the sentence. The attention component 908 will find that the word "question" is most significant.

The attention component 908 performs attention analysis using the following equation:

$$Attention(Q, K, V) = \text{softmax}\left(\frac{QK^T}{\sqrt{d}}\right)V \qquad (1).$$

The attention component 908 produces query information Q by multiplying the position-supplemented embedding vectors 906 by a query weighting matrix $W^Q$. Similarly, the attention component 908 produces key information K and value information V by multiplying the position-supplemented embedding vectors 906 by a key weighting matrix $W^K$ and a value weighting matrix $W^V$, respectively. To execute Equation (1), the attention component 908 takes the dot product of Q with the transpose of K, and then divides the dot product by a scaling factor $\sqrt{d}$, to produce a scaled result. The symbol d represents the dimensionality of Q and K. The attention component 908 takes the softmax (normalized exponential function) of the scaled result, and then multiplies the result of the softmax operation by V, to produce attention output information. In some cases, the attention component 908 is said to perform masked attention insofar as the attention component 908 masks output token information that, at any given time, has not yet been determined. Background information regarding the general concept of attention is provided in Vaswani, et al., "Attention Is All You Need," in 31st Conference on Neural Information Processing Systems (NIPS 2017), 2017, 11 pages.

Note that Fig. 9 shows that the attention component 908 is composed of plural attention heads, including a representative attention head 916. Each attention head performs the computations specified by Equation (1), but with respect to a particular representational subspace that is different than the subspaces of the other attention heads. To accomplish this operation, the attention heads perform the computations described above using different respective sets of query, key, and value weight matrices. Although not shown, the attention component 908 concatenates the output results of the attention component's separate attention heads, and then multiplies the results of this concatenation by another weight matrix $W^O$.

The add-and-normalize component 910 includes a residual connection that combines (e.g., sums) input information fed to the attention component 908 with the output information generated by the attention component 908. The add-and-normalize component 910 then normalizes the output information generated by the residual connection, e.g., by layer-normalizing values in the output information based on the mean and standard deviation of those values, or by performing root-mean-squared normalization. The other add-and-normalize component 914 performs the same functions as the first-mentioned add-and-normalize component 910. The FFN component 912 transforms input information to output information using a feed-forward neural network having any number of layers.

The first transformer component 904 produces output information 918. A series of other transformer components (920, ..., 922) perform the same functions as the first transformer component 904, each operating on output information produced by its immediately preceding transformer component. Each transformer component uses its own level-specific set of machine-trained weights. The final transformer component 922 in the language model 902 produces final output information 924.

In some implementations, a post-processing component 926 performs post-processing operations on the final output information 924. For example, the post-processing component 926 performs any of the functions of the classification components (e.g., classifying component 418 or 610) described above.

In the case of the language model 304, the post-processing component 926 uses a machine-learned linear transformation and a softmax component to predict a next token in the input sequence of tokens. In some applications, the language model 902 performs this task using a greedy selection approach (e.g., by selecting the token having the highest probability), or by using the beam search algorithm (e.g., by traversing a tree that expresses a search space of candidate next tokens). More generally, when operating as the language model 304, the language model 902 operates in an auto-regressive manner, as indicated by the loop 928. That is, the language model 902 appends a predicted token to the end of the sequence of input tokens, to provide an updated sequence of tokens. The predicted token leads to the production of a new position-supplemented vector 930. In a next pass, the language model 902 processes the updated sequence of position-supplemented vectors to generate a next predicted token. The language model 902 repeats the above process until it generates a specified stop token.

The above-described implementation of the language model 902 relies on a decoder-only architecture. Other implementations of the language model 902 use an encoder-decoder transformer-based architecture. Here, a transformer-based decoder receives encoder output information produced by a transformer-based encoder, together with decoder input information. The encoder output information specifically includes KV information that serves an input to the attention components of the decoder (except the first transformer component).

Other implementations of the language model 902 use other kinds of machine-trained models besides, or in addition to, the particular transformer-based architecture shown in Fig. 9. The other machine-trained models include any of convolutional neural networks (CNNs), recurrent neural networks (RNNs), fully-connected feed-forward neural networks (FFNS), stable diffusion models, etc., or any combination thereof.

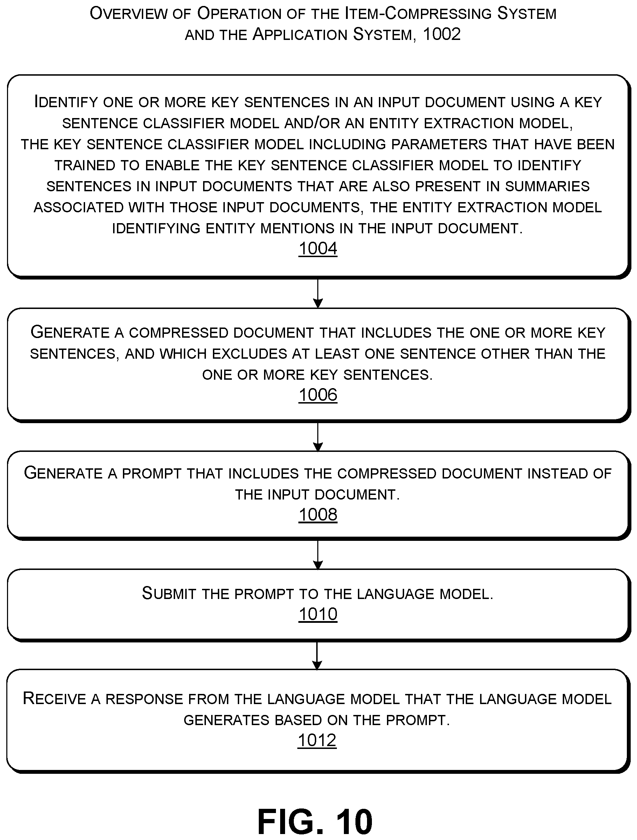

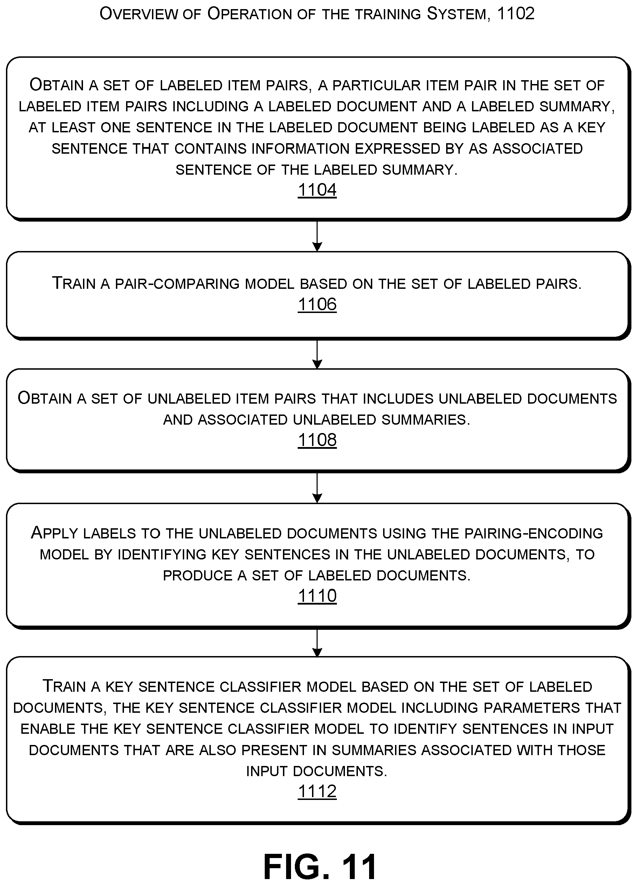

Figs. 10 and 11 show two processes that represent an overview of the systems described above. Each of the processes is expressed as a series of operations performed in a particular order. But the order of these operations is merely representative, and the operations are capable of being varied in other implementations. Further, any two or more operations described below are capable of being performed in a parallel manner. In one implementation, the blocks shown in the processes that pertain to processing-related functions are implemented by the computing equipment described in connection with Figs. 12 and 13.

More specifically, Fig. 10 shows a process 1002 that provides an overview of one manner of operation of the item-compressing system 202 of Fig. 2 and the application system 302 of Fig. 3. In block 1004, the item-compressing system 202 identifies one or more key sentences in an input document using a key sentence classifier model (e.g., the KS classifier model 104), or an entity extraction model (e.g., the entity extraction model 704), or a combination of the key sentence classifier model and the entity extraction model. The key sentence classifier model includes parameters that have been trained to enable the key sentence classifier model to identify sentences in input documents that are also present in summaries associated with those input documents. The entity extraction model identifies entity mentions in the input document. In block 1006, the item-compressing system 202 generates a compressed document (e.g., the compressed documents 206 or 208) that includes the one or more key sentences, and which excludes at least one sentence other than the one or more key sentences.

In block 1008, the application system 302 generates a prompt that includes the compressed document instead of the input document. In block 1010, the application system 302 submits the prompt (e.g., the prompt 308) to a language model (e.g., the language model 304). In block 1012, the application system 302 receives a response from the language model that the language model generates based on the prompt.

Fig. 11 shows a process 1102 that provides an overview of one manner of operation of the training system 102 of Fig. 1. In block 1104, the training system 102 obtains a set of labeled item pairs, a particular item pair in the set of labeled item pairs including a labeled document and a labeled summary, at least one sentence in the labeled document being labeled as a key sentence that contains information expressed by an associated sentence of the labeled summary. In block 1106, the training system 102 trains a pair-comparing model (e.g., the pair-comparing model 118) based on the set of labeled pairs. In block 1108, the training system 102 obtains a set of unlabeled item pairs that includes unlabeled documents and associated unlabeled summaries. In block 1110, the training system 102 applies labels to the unlabeled documents using the pairing-comparing model by identifying key sentences in the unlabeled documents, to produce a set of labeled documents. In block 1112, the training system 102 trains a key sentence classifier model (e.g., the KS classifier model 104) based on the set of labeled documents.

Fig. 12 shows computing equipment 1202 that, in some implementations, is used to implement the systems described above. The computing equipment 1202 includes a set of local devices 1204 coupled to a set of servers 1206 via a computer network 1208. Each local device corresponds to any type of computing device, including any of a desktop computing device, a laptop computing device, a handheld computing device of any type (e.g., a smartphone or a tablet-type computing device), a mixed reality device, an intelligent appliance, a wearable computing device (e.g., a smart watch), an Internet-of-Things (IoT) device, a gaming system, an immersive "cave," a media device, a vehicle-borne computing system, any type of robot computing system, a computing system in a manufacturing system, etc. In some implementations, the computer network 1208 is implemented as a local area network, a wide area network (e.g., the Internet), one or more point-to-point links, or any combination thereof.

The bottom-most overlapping box in Fig. 12 indicates that the functionality of the training system 102, the item-compressing system 202, and/or the application system 302 is capable of being spread across the local devices 1204 and/or the servers 1206 in any manner. For instance, some of the functions of the language model 304 of Fig. 3 are implemented by the servers 1206, and the remainder of the functions of the application system 302 are implemented by each local device. The training system 102 is implemented entirely by a local device (or local devices), entirely by the servers 1206, or by functionality distributed between local devices and the servers 1206.

Fig. 13 shows a computing system 1302 that, in some implementations, is used to implement any aspect of the mechanisms set forth in the above-described figures. For instance, in some implementations, the type of computing system 1302 shown in Fig. 13 is used to implement any local computing device or any server shown in Fig. 12. In all cases, the computing system 1302 represents a physical and tangible processing mechanism.

The computing system 1302 includes a processing system 1304 including one or more processors. The processor(s) include one or more central processing units (CPUs), and/or one or more graphics processing units (GPUs), and/or one or more application specific integrated circuits (ASICs), and/or one or more neural processing units (NPUs), and/or one or more tensor processing units (TPUs), etc. More generally, any processor corresponds to a general-purpose processing unit or an application-specific processor unit.

The computing system 1302 also includes computer-readable storage media 1306, corresponding to one or more computer-readable media hardware units. The computer-readable storage media 1306 retains any kind of information 1308, such as machine-readable instructions, settings, model weights, and/or other data. In some implementations, the computer-readable storage media 1306 includes one or more solid-state devices, one or more hard disks, one or more optical disks, etc. Any instance of the computer-readable storage media 1306 represents a fixed or removable unit of the computing system 1302. Further, any instance of the computer-readable storage media 1306 provides volatile and/or non-volatile retention of information. The specific term "computer-readable storage medium" or "storage device" expressly excludes propagated signals per se in transit; a computer-readable storage medium or storage device is "non-transitory" in this regard.

The computing system 1302 utilizes any instance of the computer-readable storage media 1306 in different ways. For example, in some implementations, any instance of the computer-readable storage media 1306 represents a hardware memory unit (such as random access memory (RAM)) for storing information during execution of a program by the computing system 1302, and/or a hardware storage unit (such as a hard disk) for retaining/archiving information on a more permanent basis. In the latter case, the computing system 1302 also includes one or more drive mechanisms 1310 (such as a hard drive mechanism) for storing and retrieving information from an instance of the computer-readable storage media 1306.

In some implementations, the computing system 1302 performs any of the functions described above when the processing system 1304 executes computer-readable instructions stored in any instance of the computer-readable storage media 1306. For instance, in some implementations, the computing system 1302 carries out computer-readable instructions to perform each block of the processes described with reference to Figs. 10 and 11. Fig. 13 generally indicates that hardware logic circuitry 1312 includes any combination of the processing system 1304 and the computer-readable storage media 1306.

In addition, or alternatively, the processing system 1304 includes one or more other configurable logic units that perform operations using a collection of logic gates, such as field-programmable gate arrays (FPGAs), etc. In these implementations, the processing system 1304 effectively incorporates a storage device that stores computer-readable instructions, insofar as the configurable logic units are configured to execute the instructions and therefore embody or store these instructions.

In some cases (e.g., in the case in which the computing system 1302 represents a user computing device), the computing system 1302 also includes an input/output interface 1314 for receiving various inputs (via input devices 1316), and for providing various outputs (via output devices 1318). Illustrative input devices include a keyboard device, a mouse input device, a touchscreen input device, a digitizing pad, one or more static image cameras, one or more video cameras, one or more depth camera systems, one or more microphones, a voice recognition mechanism, any position-determining devices (e.g., GPS devices), any movement detection mechanisms (e.g., accelerometers and/or gyroscopes), etc. In some implementations, one particular output mechanism includes a display device 1320 and an associated graphical user interface presentation (GUI) 1322. The display device 1320 corresponds to a liquid crystal display device, a light-emitting diode display (LED) device, a cathode ray tube device, a projection mechanism, etc. Other output devices include a printer, one or more speakers, a haptic output mechanism, an archival mechanism (for storing output information), etc. In some implementations, the computing system 1302 also includes one or more network interfaces 1324 for exchanging data with other devices via one or more communication conduits 1326. One or more communication buses 1328 communicatively couple the above-described units together.

The communication conduit(s) 1326 is implemented in any manner, e.g., by a local area computer network, a wide area computer network (e.g., the Internet), point-to-point connections, or any combination thereof. The communication conduit(s) 1326 include any combination of hardwired links, wireless links, routers, gateway functionality, name servers, etc., governed by any protocol or combination of protocols.

Fig. 13 shows the computing system 1302 as being composed of a discrete collection of separate units. In some cases, the collection of units corresponds to discrete hardware units provided in a computing device chassis having any form factor. Fig. 13 shows illustrative form factors in its bottom portion. In other cases, the computing system 1302 includes a hardware logic unit that integrates the functions of two or more of the units shown in Fig. 13. For instance, in some implementations, the computing system 1302 includes a system on a chip (SoC or SOC), corresponding to an integrated circuit that combines the functions of two or more of the units shown in Fig. 13.

The following summary provides a set of illustrative examples of the technology set forth herein.

(A1) According to one aspect, a method (e.g., the process 1002) is described for interacting with a language model (e.g., the language model (304). The method includes identifying (e.g., in block 1004) one or more key sentences in an input document (e.g., the input document 312) using a key sentence classifier model (e.g., the KS classifier model 104), or an entity extraction model (e.g., the entity extraction model 704), or a combination of the key sentence classifier model and the entity extraction model. The key sentence classifier model includes parameters that have been trained to enable the key sentence classifier model to identify sentences in input documents that are also present in summaries associated with those input documents. The entity extraction model identifies entity mentions in the input document. The method further includes: generating (e.g., in block 1006) a compressed document that includes the one or more key sentences, and which excludes at least one sentence other than the one or more key sentences; generating (e.g., in block 1008) a prompt that includes the compressed document instead of the input document; submitting (e.g., in block 1010) the prompt to the language model; and receiving (e.g., in block 1012) a response from the language model that the language model generates based on the prompt.

(A2) According to some implementations of the method of A1, a particular sentence in the input document is a single complete sentence.

(A3) According to some implementations of the method of A1 or A2, the identifying one or more key sentences includes: mapping each sentence in the input document into a score using the key sentence classifier model; and determining whether a particular sentence in the input document is a key sentence by comparing a score associated with the particular sentence with a prescribed threshold value.

(A4) According to some implementations of any of the methods A1-A3, the key sentence classifier model processes a particular document sentence by: mapping the particular document sentence into a document-sentence input embedding; transforming the document-sentence input embedding into document-sentence hidden state information, the transforming including attention processing that identifies relationships among parts of the document-sentence input embedding; and classifying the particular document sentence based on the document-sentence hidden state information.

(A5) According to some implementations of any of the methods A1-A4, the identifying one or more key sentences includes: determining entity mentions in a particular sentence in the input document using the entity extraction model; and identifying the particular sentence as a key sentence upon determining that a number of entity mentions in the particular sentence satisfies a prescribed threshold value.

(A6) According to some implementations of the method of A5, the determining entity mentions determines whether the particular sentence includes any entity mentions within a group of entity types. The group of entity types is selected based a configuration setting and/or an assessment of a subject matter field associated with the input document.

(A7) According to some implementations of any of the methods A1-A6, the identifying one or more key sentences identifies each key sentence based on a combination of scores generated by the key sentence classifier model and the entity extraction model.

(A8) According to some implementations of any of the methods A1-A7, the generating a compressed document includes: segmenting the input document into plural segments; and selectively retaining any of the plural segments that includes a key sentence, and excluding segments that do not contain key sentences.

(A9) According to some implementations of any of the method of A8, the segmenting uses a machine-trained model that identifies semantic relationships between pairs of neighboring portions of the input document.

(A10) According to some implementations of any of the methods A1-A9, the parameters of the key sentence classifier are trained by: obtaining a set of labeled item pairs, a particular item pair in the set of labeled item pairs including a labeled document and a labeled summary, at least one sentence in the labeled document being labeled as a key sentence that contains information expressed by an associated sentence of the labeled summary; training a pair-comparing model based on the set of labeled pairs; obtaining a set of unlabeled item pairs that includes unlabeled documents and associated unlabeled summaries; applying labels to the unlabeled documents using the pairing-encoding model by identifying key sentences in the unlabeled documents, to produce a set of labeled documents; and training the key sentence classifier model based on the set of labeled documents.

(A11) According to some implementations of the method of A10, the pair-comparing model is a cross-encoder model that operates by: forming a sentence pair by a combining a particular document sentence selected from a particular document, and a particular summary sentence selected from a particular summary that is associated with the particular document; mapping the sentence pair into a sentence-pair input embedding; transforming the sentence-pair input embedding into sentence-pair hidden state information; and determining whether there is a matching relationship between the particular document sentence and the particular summary sentence based on the document-pair hidden state information.

(A12) According to some implementations of the method of A11, the transforming includes attention processing that identifies relationships among parts of the sentence-pair input embedding.

(A13) According to some implementations of the method A10, the pair-comparing model is a bi-encoder model that operates by: mapping a particular document sentence, selected from a particular document, into a document-sentence input embedding; mapping a particular summary sentence, selected from a particular summary associated with the particular document, into a summary-sentence input embedding; transforming the document-sentence input embedding into document-sentence hidden state information; transforming the summary-sentence input embedding into summary-sentence hidden state information; and determining whether there is a matching relationship between the particular document sentence and the particular summary sentence based on the document-sentence hidden state information and the summary-sentence hidden state information.

(A14) According to some implementations of the method of A13, the transforming the document-sentence input embedding uses attention processing that identifies relationships among parts of the document-sentence input embedding, and wherein the transforming the summary-sentence input embedding uses attention processing that identifies relationships among parts of the summary-sentence input embedding.

(B1) According to another aspect, another method (e.g., the process 1102) is described for training a key sentence classifier model (e.g., the KS classifier model 104). The method includes: obtaining (e.g., in block 1104) a set of labeled item pairs, a particular item pair in the set of labeled item pairs including a labeled document and a labeled summary, at least one sentence in the labeled document being labeled as a key sentence that contains information expressed by an associated sentence of the labeled summary; training (e.g., in block 1106) a pair-comparing model (e.g., the pair-comparing model 118) based on the set of labeled pairs; obtaining (e.g., in block 1108) a set of unlabeled item pairs that includes unlabeled documents and associated unlabeled summaries; applying (e.g., in block 1110) labels to the unlabeled documents using the pairing-encoding model by identifying key sentences in the unlabeled documents, to produce a set of labeled documents; and training (e.g., in block 1112) the key sentence classifier model based on the set of labeled documents, the key sentence classifier model, once trained, including parameters that enable the key sentence classifier model to identify sentences in input documents that are also present in summaries associated with those input documents.

In yet another aspect, some implementations of the technology described herein include a computing system (e.g., the computing system 1302) that includes a processing system (e.g., the processing system 1304) having a processor. The computing system also includes a storage device (e.g., the computer-readable storage media 1306) for storing computer-readable instructions (e.g., the information 1308). The processing system executes the computer-readable instructions to perform any of the methods described herein (e.g., any individual method of the methods of A1-A14 and B1).

In yet another aspect, some implementations of the technology described herein include a computer-readable storage medium (e.g., the computer-readable storage media 1306) for storing computer-readable instructions (e.g., the information 1308). A processing system (e.g., the processing system 1304) executes the computer-readable instructions to perform any of the operations described herein (e.g., the operations in any individual method of the methods of A1-A14 and B1).

More generally stated, any of the individual elements and steps described herein are combinable into any logically consistent permutation or subset. Further, any such combination is capable of being manifested as a method, device, system, computer-readable storage medium, data structure, article of manufacture, graphical user interface presentation, etc. The technology is also expressible as a series of means-plus-format elements in the claims, although this format should not be considered to be invoked unless the phrase "means for" is explicitly used in the claims.

This description may have identified one or more features as optional. This type of statement is not to be interpreted as an exhaustive indication of features that are to be considered optional; generally, any feature is to be considered as an example, although not explicitly identified in the text, unless otherwise noted. Further, any features described as alternative ways of carrying out identified functions or implementing identified mechanisms are also combinable together in any combination, unless otherwise noted.

In terms of specific terminology, the phrase "configured to" encompasses various physical and tangible mechanisms for performing an identified operation. The mechanisms are configurable to perform an operation using the hardware logic circuitry 1312 of Fig. 13. The term "logic" likewise encompasses various physical and tangible mechanisms for performing a task. For instance, each processing-related operation illustrated in the flowcharts of Figs. 10 and 11 corresponds to a logic component for performing that operation.

Further, the term "plurality" or "plural" or the plural form of any term (without explicit use of "plurality" or "plural") refers to two or more items, and does not necessarily imply "all" items of a particular kind, unless otherwise explicitly specified. The term "at least one of" refers to one or more items; reference to a single item, without explicit recitation of "at least one of" or the like, is not intended to preclude the inclusion of plural items, unless otherwise noted. Further, the descriptors "first," "second," "third," etc. are used to distinguish among different items, and do not imply an ordering among items, unless otherwise noted. The phrase "A and/or B" means A, or B, or A and B. The phrase "any combination thereof" refers to any combination of two or more elements in a list of elements. Further, the terms "comprising," "including," and "having" are open-ended terms that are used to identify at least one part of a larger whole, but not necessarily all parts of the whole. A "set" is a group that includes one or more members. The phrase "A corresponds to B" means "A is B" in some contexts. "Environment-specific" means that a state is chosen for use in a particular environment. Finally, the terms "exemplary" or "illustrative" refer to one implementation among potentially many implementations.

In closing, the functionality described herein is capable of employing various mechanisms to ensure that any user data is handled in a manner that conforms to applicable laws, social norms, and the expectations and preferences of individual users. For example, the functionality is configurable to allow a user to expressly opt in to (and then expressly opt out of) the provisions of the functionality. The functionality is also configurable to provide suitable security mechanisms to ensure the privacy of the user data (such as data-sanitizing mechanisms, encryption mechanisms, and/or password-protection mechanisms).

Further, the description may have set forth various concepts in the context of illustrative challenges or problems. This manner of explanation is not intended to suggest that others have appreciated and/or articulated the challenges or problems in the manner specified herein. Further, this manner of explanation is not intended to suggest that the subject matter recited in the claims is limited to solving the identified challenges or problems; that is, the subject matter in the claims may be applied in the context of challenges or problems other than those described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1.   A method (1002) for interacting with a language model (304), comprising:

identifying (1004) one or more key sentences in an input document (312) using a key sentence classifier model (104) or an entity extraction model (704), or a combination of the key sentence classifier model (104) and the entity extraction model (704),
the key sentence classifier model (104) including parameters that have been trained to enable the key sentence classifier model (104) to identify sentences in input documents that are also present in summaries associated with those input documents,
the entity extraction model (704) identifying entity mentions in the input document (312);
generating (1006) a compressed document (314) that includes the one or more key sentences, and which excludes at least one sentence other than the one or more key sentences;
generating (1008) a prompt (308) that includes the compressed document (314) instead of the input document (312);
submitting (1010) the prompt (308) to the language model (304); and
receiving (1012) a response from the language model (304) that the language model generates based on the prompt (308).

2.   The method of claim 1, wherein a particular sentence in the input document is a single complete sentence.

3.   The method of claim 1 or 2, wherein the identifying one or more key sentences includes:

mapping each sentence in the input document into a score using the key sentence classifier model; and
determining whether a particular sentence in the input document is a key sentence by comparing a score associated with the particular sentence with a prescribed threshold value.

4.   The method of any of claims 1-3, wherein the key sentence classifier model processes a particular document sentence by:

mapping the particular document sentence into a document-sentence input embedding;

transforming the document-sentence input embedding into document-sentence hidden state information, the transforming including attention processing that identifies relationships among parts of the document-sentence input embedding; and

classifying the particular document sentence based on the document-sentence hidden state information.

5. The method of any of claims 1-4, wherein the identifying one or more key sentences includes:

determining entity mentions in a particular sentence in the input document using the entity extraction model; and

identifying the particular sentence as a key sentence upon determining that a number of entity mentions in the particular sentence satisfies a prescribed threshold value.

6. The method of any of claims 1-5,

wherein the determining entity mentions determines whether the particular sentence includes any entity mentions within a group of entity types, and

wherein the group of entity types is selected based a configuration setting, or an assessment of a subject matter field associated with the input document, or a combination of the setting and the assessment.

7. The method of any of claims 1-6, wherein the identifying one or more key sentences identifies each key sentence based on a combination of scores generated by the key sentence classifier model and the entity extraction model.

8. The method of any of claims 1-7, wherein the generating a compressed document includes:

segmenting the input document into plural segments; and

selectively retaining any of the plural segments that includes a key sentence, and excluding segments that do not contain key sentences.

9. The method of any of claims 1-8, wherein the segmenting uses a machine-trained model that identifies semantic relationships between pairs of neighboring portions of the input document.

10. The method of any of claims 1-9, wherein the parameters of the key sentence classifier are trained by:

obtaining a set of labeled item pairs, a particular item pair in the set of labeled item pairs including a labeled document and a labeled summary, at least one sentence in the labeled document being labeled as a key sentence that contains information expressed by an associated sentence of the labeled summary;

training a pair-comparing model based on the set of labeled pairs;

obtaining a set of unlabeled item pairs that includes unlabeled documents and associated unlabeled summaries;

applying labels to the unlabeled documents using the pairing-encoding model by identifying key sentences in the unlabeled documents, to produce a set of labeled documents; and

training the key sentence classifier model based on the set of labeled documents.

11. The method of any of claims 1-10, wherein the pair-comparing model is a cross-encoder model that operates by:

forming a sentence pair by a combining a particular document sentence selected from a particular document, and a particular summary sentence selected from a particular summary that is associated with the particular document;

mapping the sentence pair into a sentence-pair input embedding;

transforming the sentence-pair input embedding into sentence-pair hidden state information; and

determining whether there is a matching relationship between the particular document sentence and the particular summary sentence based on the document-pair hidden state information.

12. The method of claim 10, wherein the pair-comparing model is a bi-encoder model that operates by:

mapping a particular document sentence, selected from a particular document, into a document-sentence input embedding;

mapping a particular summary sentence, selected from a particular summary associated with the particular document, into a summary-sentence input embedding;

transforming the document-sentence input embedding into document-sentence hidden state information;

transforming the summary-sentence input embedding into summary-sentence hidden state information; and determining whether there is a matching relationship between the particular document sentence and the particular summary sentence based on the document-sentence hidden state information and the summary-sentence hidden state information.

13. A processing system having a processor and a storage device that is configured to perform the method according to any of claims 1-12.

14. A computer-readable storage medium for storing computer-readable instructions that, when executed by a processing system, perform the method according to any of claims 1-12.

15. A computing system (102) for training a key sentence classifier model (104), comprising:

an instruction data store (1306) for storing computer-readable instructions (1308); and
a processing system (1304) for executing the computer-readable instructions (1308) in the data store (1306), to perform operations including:

obtaining (1104) a set of labeled item pairs, a particular item pair in the set of labeled item pairs including a labeled document and a labeled summary, at least one sentence in the labeled document being labeled as a key sentence that contains information expressed by an associated sentence of the labeled summary;
training (1106) a pair-comparing model (118) based on the set of labeled pairs;
obtaining (1108) a set of unlabeled item pairs that includes unlabeled documents and associated unlabeled summaries;
applying (1110) labels to the unlabeled documents using the pairing-encoding model (118) by identifying key sentences in the unlabeled documents, to produce a set of labeled documents; and
training (1112) the key sentence classifier model (104) based on the set of labeled documents,
the key sentence classifier model (104), once trained, including parameters that enable the key sentence classifier model (104) to identify sentences in input documents that are also present in summaries associated with those input documents.

FIG. 1

ITEM-COMPRESSING SYSTEM 202

INPUT DOCUMENT 204

ITEM-SEGMENTING COMPONENT 216

KEY-IDENTIFYING COMPONENT 210

KEY SENTENCE (KS) CLASSIFIER MODEL 104

AND/OR

ENTITY EXTRACTION COMPONENT 212

TRAINING SYSTEM OF FIG. 1 102

COM-PRESSING COMPONENT 220

G1
218
G2
G3

214

AND/OR

G1
G3
208

206

**FIG. 2**    EXAMPLES OF COMPRESSED DOCUMENTS

18

APPLICATION
SYSTEM
302

INPUT TASK
(E.G., INPUT
QUESTION)
310

PROMPT 308

INPUT TASK
312

INPUT
DOCUMENT
312

PROMPT-
GENERATING
COMPONENT
306

SYSTEM
INSTRUC-
TION
316

COM-
PRESSED
DOC.
314

ORIGINAL
DOCUMENT
312

COM-
PRESSED
DOCUMENT
314

LANGUAGE
MODEL
RESPONSE
318

ITEM-
COMPRESSING
SYSTEM
202

FIG. 3

LANGUAGE MODEL
304

CROSS-ENCODER
MODEL
402

RELATED? (Y OR N)

DECISION COMPONENT 420

CLASSIFYING COMPONENT
418

416

TRANSFORMER
414

412

EMBEDDING COMPONENT
410

DOCUMENT
SENTENCE
404

SUMMARY
SENTENCE
406

SENTENCE PAIR 408

**FIG. 4**

BI-ENCODER MODEL
502

RELATED? (Y OR N)

DECISION COMPONENT 524

SIMILARITY-COMPUTING
COMPONENT 522

516          520

FIRST
TRANS-
FORMER
514

SECOND
TRANS-
FORMER
518

508          512

EMBEDDING COMPONENT
504

DOCUMENT
SENTENCE
506

SUMMARY
SENTENCE
510

**FIG. 5**

KEY SENTENCE
(KS) CLASSIFIER
MODEL

104 —

DECISION COMPONENT 614 → KEY? (Y OR N)

↑

CLASSIFYING COMPONENT
612

↑

DOCUMENT-SENTENCE
HIDDEN STATE INFORMATION
610

TRANSFORMER
608

↑

DOCUMENT-SENTENCE INPUT
EMBEDDING INFO. 606

EMBEDDING COMPONENT
602

↑

CANDIDATE DOCUMENT SENTENCE
604

## FIG. 6

ENTITY EXTRACTION COMPONENT 212

CANDIDATE
DOCUMENT
SENTENCE
702

→

ENTITY
EXTRACTION
MODEL
704

→

DECISION
COMPONENT
706

→

KEY?
(Y OR N)

## FIG. 7

INPUT
DOCUMENT
802

ITEM-SEGMENTING
COMPONENT

← 216

s1
s2
s3
s4
s5
s6
s7
s7
⋮
sn

PAIR-
COMPARING
MODEL
804

TRANSITION
SCORE

806

TRANSITION
SCORES

SEGMENT-
DECIDING
COMPONENT
808

SCORE

810          812

TRANSITION LOCATION

s1
s2
s3

G1

814

T₁

s4
s5

G2

T₂

s6
s7
s7
⋮
sn

G3

**FIG. 8**

TRANSFORMER-
BASED LANGUAGE
MODEL

902

POST PROCESSING COMPONENT 926

OUTPUT INFORMATION 924

928

NTH TRANSFORMER COMPONENT 922

SECOND TRANSFORMER COMPONENT 920

918

ADD & NORMALIZE COMPONENT 2
914

FFN COMPONENT
912

ADD & NORMALIZE COMPONENT 1
910

ATTENTION HEAD 1
916

ATTENTION
COMPONENT
908

FIRST TRANSFORMER
COMPONENT 904

906  { ⋯                                      } 930

**FIG. 9**

OVERVIEW OF OPERATION OF THE ITEM-COMPRESSING SYSTEM
AND THE APPLICATION SYSTEM, 1002

IDENTIFY ONE OR MORE KEY SENTENCES IN AN INPUT DOCUMENT USING A KEY
SENTENCE CLASSIFIER MODEL AND/OR AN ENTITY EXTRACTION MODEL,
THE KEY SENTENCE CLASSIFIER MODEL INCLUDING PARAMETERS THAT HAVE BEEN
TRAINED TO ENABLE THE KEY SENTENCE CLASSIFIER MODEL TO IDENTIFY
SENTENCES IN INPUT DOCUMENTS THAT ARE ALSO PRESENT IN SUMMARIES
ASSOCIATED WITH THOSE INPUT DOCUMENTS, THE ENTITY EXTRACTION MODEL
IDENTIFYING ENTITY MENTIONS IN THE INPUT DOCUMENT.
1004

GENERATE A COMPRESSED DOCUMENT THAT INCLUDES THE ONE OR MORE KEY
SENTENCES, AND WHICH EXCLUDES AT LEAST ONE SENTENCE OTHER THAN THE
ONE OR MORE KEY SENTENCES.
1006

GENERATE A PROMPT THAT INCLUDES THE COMPRESSED DOCUMENT INSTEAD OF
THE INPUT DOCUMENT.
1008

SUBMIT THE PROMPT TO THE LANGUAGE MODEL.
1010

RECEIVE A RESPONSE FROM THE LANGUAGE MODEL THAT THE LANGUAGE MODEL
GENERATES BASED ON THE PROMPT.
1012

# FIG. 10

OVERVIEW OF OPERATION OF THE TRAINING SYSTEM, 1102

OBTAIN A SET OF LABELED ITEM PAIRS, A PARTICULAR ITEM PAIR IN THE SET OF LABELED ITEM PAIRS INCLUDING A LABELED DOCUMENT AND A LABELED SUMMARY, AT LEAST ONE SENTENCE IN THE LABELED DOCUMENT BEING LABELED AS A KEY SENTENCE THAT CONTAINS INFORMATION EXPRESSED BY AS ASSOCIATED SENTENCE OF THE LABELED SUMMARY.
1104

TRAIN A PAIR-COMPARING MODEL BASED ON THE SET OF LABELED PAIRS.
1106

OBTAIN A SET OF UNLABELED ITEM PAIRS THAT INCLUDES UNLABELED DOCUMENTS AND ASSOCIATED UNLABELED SUMMARIES.
1108

APPLY LABELS TO THE UNLABELED DOCUMENTS USING THE PAIRING-ENCODING MODEL BY IDENTIFYING KEY SENTENCES IN THE UNLABELED DOCUMENTS, TO PRODUCE A SET OF LABELED DOCUMENTS.
1110

TRAIN A KEY SENTENCE CLASSIFIER MODEL BASED ON THE SET OF LABELED DOCUMENTS, THE KEY SENTENCE CLASSIFIER MODEL INCLUDING PARAMETERS THAT ENABLE THE KEY SENTENCE CLASSIFIER MODEL TO IDENTIFY SENTENCES IN INPUT DOCUMENTS THAT ARE ALSO PRESENT IN SUMMARIES ASSOCIATED WITH THOSE INPUT DOCUMENTS.
1112

# FIG. 11

1204

1206

COMPUTER NETWORK
1208

LOCAL DEVICE

SERVER

TRAINING SYSTEM 102,
ITEM-COMPRESSING SYSTEM 202,
LANGUAGE MODEL APPLICATION 302

1202

# FIG. 12

OUTPUT DEVICE(S) 1318

HARDWARE LOGIC CIRCUITRY
1312

DISPLAY DEVICE
1320

GUI
1322

PROCESSING SYSTEM
1304
(INCLUDING ANY OF
CPU(S), GPU(S),
ASIC(S), CONFIGURABLE
LOGIC UNIT(S), ETC.)

COMMUN-
ICATION
CONDUIT(S)
1326

I/O
1314

1328

NETWORK
INTER-
FACE(S)
1324

INPUT
DEVICE(S)
1316

COMPUTER-READABLE
STORAGE MEDIA, E.G.,
1306

INSTRUCTIONS,
DATA,
SETTINGS, ETC.
1308

DRIVE
MECHANISMS
1310

1302
COMPUTING SYSTEM

FOR
EXAMPLE:

GAME

"CAVE"

SERVER

# FIG. 13

Europäisches
Patentamt
European
Patent Office
Office européen
des brevets

# EUROPEAN SEARCH REPORT

**Application Number**

EP 25 17 5296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/222149 A1 (DELL KRYSTEN NICOLE [US] ET AL) 13 July 2023 (2023-07-13) * claims 1,17 * | 1-15 | INV. G06F40/284 G06F16/353 G06F40/295 |
| A | ZHANG MOHAN ET AL: "A Key Sentences Based Convolution Neural Network for Text Sentiment Classification", JOURNAL OF PHYSICS: CONFERENCE SERIES, INSTITUTE OF PHYSICS PUBLISHING, BRISTOL, GB, vol. 1229, no. 1, 29 May 2019 (2019-05-29) , page 12062, XP020337441, ISSN: 1742-6596, DOI: 10.1088/1742-6596/1229/1/012062 [retrieved on 2019-05-29] * the whole document * | 1-15 | G06F40/30 G06F40/40 |
| A | CHRISTIN SEIFERT ET AL: "Word Clouds for Efficient Document Labeling", 5 October 2011 (2011-10-05), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 292 - 306, XP019166931, ISBN: 978-3-540-74549-5 * the whole document * | 1-15 | |

**TECHNICAL FIELDS SEARCHED (IPC)**

G06F

The present search report has been drawn up for all claims

| Place of search | Date of completion of the search | Examiner |
|---|---|---|
| Berlin | 8 October 2025 | Abram, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**EP 4 654 074 A1**

## ANNEX TO THE EUROPEAN SEARCH REPORT
## ON EUROPEAN PATENT APPLICATION NO.

EP 25 17 5296

08-10-2025

| Patent document cited in search report | Publication date | Patent family member(s) | Publication date |
|---|---|---|---|
| US 2023222149 A1 | 13-07-2023 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DEVLIN et al.** BERT: Pre-training of Deep Bidirectional Transformers for Language Understanding. *arXiv, arXiv:1810.04805v2 [cs.CL*, 24 May 2019, 16
- **SCAO et al.** BLOOM: A 176B-Parameter Open-Access Multilingual Language Model. *arXiv, arXiv:2211.05100v2 [cs.CL*, 11 December 2022, 62

- **TOUVRON et al.** LLaMA: Open and Efficient Foundation Language Models. *arXiv, arXiv:2302.13971v1 [cs.CL*, 27 February 2023, 27
- **VASWANI et al.** Attention Is All You Need. *31st Conference on Neural Information Processing Systems (NIPS 2017)*, 2017, 11